# EUROPEAN PATENT SPECIFICATION

(11) **EP 0 284 443 B1**
(45) Date of publication and mention of the grant of the patent: **24.02.1993**
(21) Application number: 88302752.6
(22) Date of filing: 28.03.1988
(51) Int. Cl.: G11B 7/09, G11B 7/095, G11B 33/10, G11B 19/04

(54) **Optical disc drive systems**
Antriebssysteme für optische Platten
Systèmes pour unités de disques optiques

(30) Priority: 27.03.1987 JP 71386/87
(43) Date of publication of application: 28.09.1988
(73) Proprietor: SONY CORPORATION, Tokyo 141 (JP)
(72) Inventor: Wachi, Shigeaki c/o Patents Division, Shinagawa-ku Tokyo 141 (JP)
(74) Representative: Cotter, Ivan John

(56) References cited:
- FR-A- 2 536 196
- PATENT ABSTRACTS OF JAPAN, vol. 9, no. 186 (P-377)(1909), 2 August 1985, & JP-A-6055523
- PATENT ABSTRACTS OF JAPAN, vol. 10, no. 143 (P-459)(2200), 27 May 1986, & JP-A-60261044

## Description

This invention relates to optical disc drive systems for at least reproducing information recorded on an optical disc. More particularly, but not exclusively, the invention relates to recording and reproducing apparatus for recording and reproducing information on an optical disc.

As is well known, an optical disc recording and reproducing apparatus scans an optical disc with a laser beam for recording and reproducing information thereon. The optical disc is formed with concentric or helical tracks for recording information thereon. The recording and reproducing apparatus includes a tracking servomechanism for accurately irradiating the laser beam onto the track and a focus servo system for adjusting focus of the laser beam.

Such servomechanisms have limited servo characteristics. Because of this, the tracking servomechanism cannot work effectively if the circularity of the optical disc is poor enough to cause errors in recording and reproducing information. Also, if an optical disc having poor flatness is used, the focus servomechanism will not work effectively, which will cause frequent data errors.

Conventionally, in order to distinguish good discs and bad discs among manufactured discs, a standard is set by radial run out (which is deviation of circularity of the recording track from an accurate circle) and axial run out (which is deviation of the disc surface from accurate flatness).

However, in practical operation, if servo system trouble arises, it is not possible to judge whether an error is caused by the hardware or the disc. Conventionally, a standard disc is substituted for the disc being used in order to check the hardware. By checking the hardware, trouble-shooting can be carried out. However, this process causes a relatively long period of time to be wasted. Furthermore, in the event that the disc is used as a back-up disc for storing back-up data of a computer and so forth, reliability is degraded. In addition, the above-mentioned trouble-shooting technique may cause delay in data processing.

Japanese Published Patent Application JP-A-60 261044 discloses an optical disc drive system in which focus, tracking and information signals are monitored to detect disc defects.

According to the present invention there is provided an optical disc drive system comprising:
an optical head for at least reproducing information on an optical disc, said information including a head position signal;
a servo system responsive to said head position signal and associated with the optical head for controlling head position with regard to the disc on the basis of the value of a head position error indicative signal;
means for indicating disc defects in response to said position error indicative signal; characterised by
extraction means for extracting a run out frequency component in said servo system and for outputting a first signal indicative of said run out frequency component, said run out frequency component being dependent upon disc rotation period;
model means for establishing a model representative of a head actuator coupled to said optical head and for producing a second signal indicative of run out for said optical disc on the basis of the value of said first signal; and
discriminator means for discriminating an excessive run out magnitude of said optical disc on the basis of the value of said second signal.

The run out magnitude of the disc as determined by the discriminator means is indicative of whether or not the disc is defective.

The servo system may be a tracking servo system, in which case the error indicative signal represents a tracking error and the extraction means is operative to extract a radial component frequency. In the alternative, the servo system may be a focus servo system, in which case the error indicative signal represents a focus error and the extraction means is operative to extract an axial component frequency.

The invention will now be further described, by way of illustrative and non-limiting example, with reference to the accompanying drawings, in which:
Figure 1 is a block diagram showing a preferred embodiment of a tracking servo circuit, and a circuit for detecting a defective disc, to be employed in an optical disc recording and reproducing apparatus embodying the invention;
Figure 2 is a block diagram of a transfer element that can be employed in the tracking servo circuit of Figure 1;
Figure 3 is a chart showing transfer characteristics of the tracking servo circuit;
Figure 4(a) is a block diagram showing a transfer model of an actuator used in the tracking servo circuit;
Figure 4(b) is a chart showing transfer characteristics of the actuator;
Figure 5 is a block diagram of an example of how the defective disc detecting circuit of Figure 1 may be constructed;
Figure 6 is a circuit diagram of another transfer element that can be employed in the tracking servo circuit of Figure 1; and
Figures 7(a) and 7(b) show run out standard frequency characteristics.

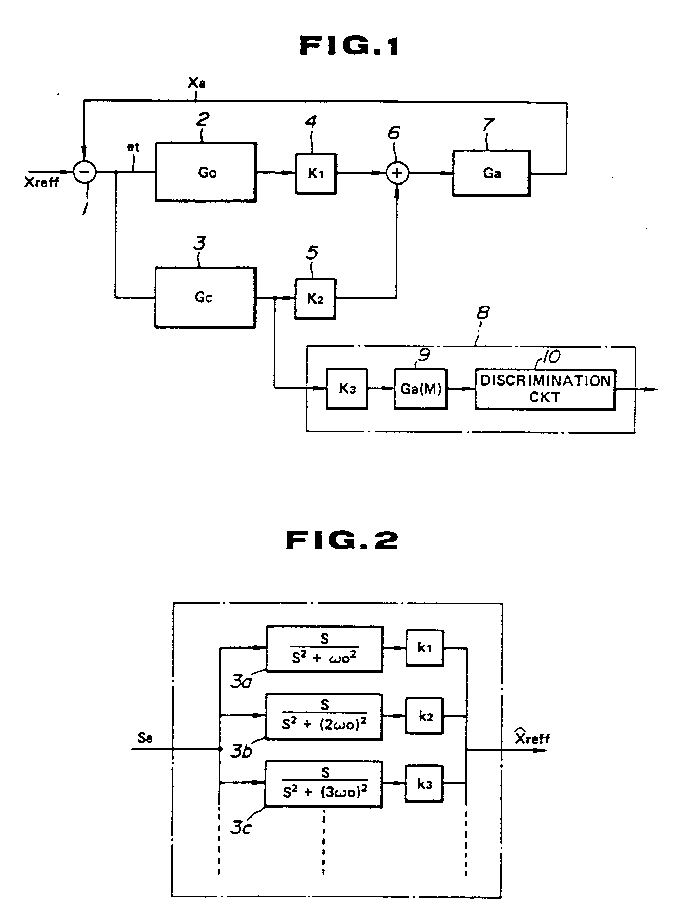

Figure 1 shows a preferred embodiment of a tracking servo circuit or system (and a defective disc detecting circuit) of an optical disc recording and reproducing apparatus embodying the invention. The tracking servo circuit includes a subtractor (subtractor circuit) 1 which receives a target value indicative signal Xreff representative of a target value, towards which an optical head of the optical disc recording and reproducing apparatus is to be controlled, and a control magnitude indicative signal Xa produced by a tracking servo actuator 7. The subtractor 1 produces a tracking error signal et on the basis of the difference of the values of the signals Xreff and Xa, the signal et being fed to first and second transfer elements 2 and 3. The first transfer element 2 may comprise a known phase compensation circuit and thus is designed to have characteristics compensating signal transfer characteristics of the actuator 7. The second transfer element 3 may comprise a filter circuit and is designed to have substantially high response characteristics with high gain to an input signal component representative of eccentricity of an optical disc.

Figure 2 shows one example of the second transfer element 3. The second transfer element 3 comprises a plurality of band-pass filters 3a, 3b, 3c ... 3n and coefficient circuits k1, k2, k3 ... kn which comprise respective amplifiers. Each band-pass filter 3a, 3b, 3c ... 3n has a passband corresponding to a rotational frequency ω0 of the optical disc and high frequency component thereof.

The first and second transfer elements 2 and 3 are connected to coefficient circuits 4 and 5, respectively. The coefficient circuits 4 and 5 may comprise amplifiers and each is designed to amplify the input signal from the associated one of the first and second transfer elements 2 and 3 with a respective one of preset coefficients K1 and K2. Outputs of the coefficient circuits 4 and 5 are added in an adder (adder circuit) 6. The adder 6 outputs a driver signal to the tracking servo actuator 7 to drive the latter.

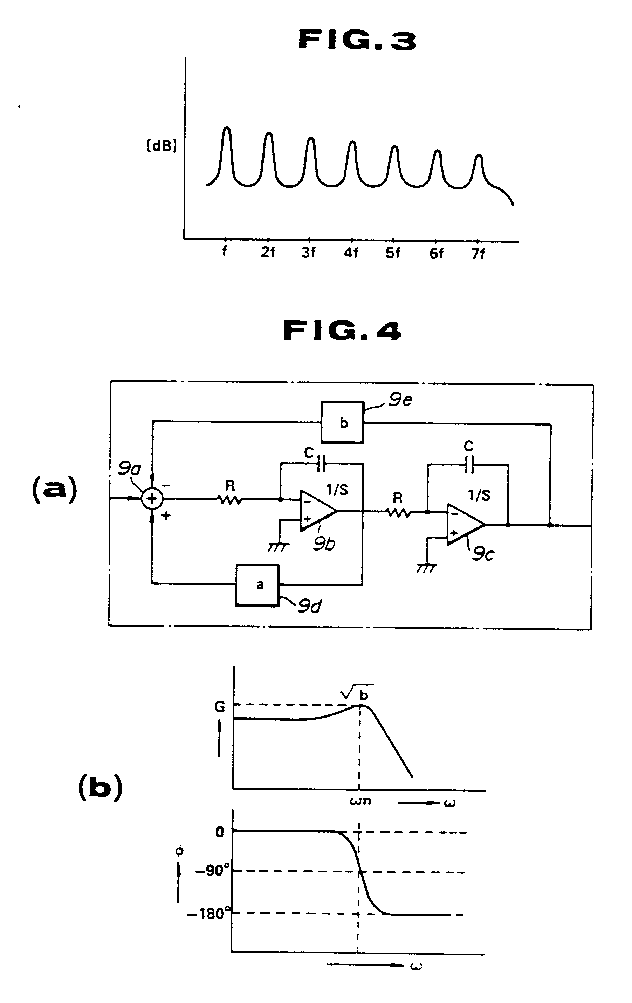

As will be seen from Figure 1, the subtractor 1, the first and second transfer elements 2 and 3, the coefficient circuits 4 and 5, the adder 6 and the tracking servo actuator 7 form a tracking servo loop that derives the control magnitude indicative signal Xa for controlling the magnitude of operation of the actuator towards the target value indicated by the signal Xreff. In such servo loop, a stable servo system with reduced steady-state deviation can be obtained by providing a high loop gain for high transfer characteristics relative to an eccentric component f, 2f, 3f ... nf of the tracking error signal, which eccentric component constitutes the major part of the tracking error signal, as shown in Figure 3.

The illustrated embodiment is further provided with a defective disc detecting circuit 8. The circuit 8 includes a coefficient circuit K3 comprising an amplifier having a gain corresponding to a predetermined coefficient K3, an actuator model indicative signal generating circuit 9, and a discriminator circuit 10. The circuit 8 is designed to discriminate between good and defective discs by detecting run out magnitude.

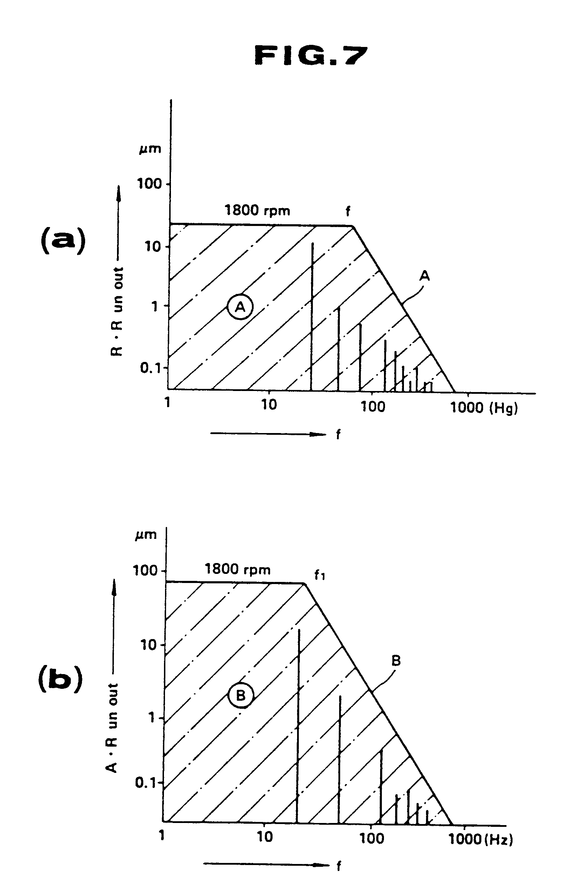

Since the eccentric component constitutes the major part of the tracking error signal, the target value Xreff for the tracking servo circuit substantially corresponds to the magnitude of radial run out of the disc. As set forth above, the second transfer element 3 is constituted by a plurality of band-pass filters 3a etc. having passbands selected substantially to correspond to a frequency range corresponding to the rotational frequency of the optical disc. Therefore, the output of the second transfer element 3 may include only a signal component corresponding to the run out frequency of the disc that is loaded. Therefore, by checking the output of the second transfer element 3 with reference to a run out standard as defined by a region A in Figure 7(a), discrimination between a good or defective loaded disc can be effected. Therefore, in the illustrated embodiment, the defective disc detecting circuit 8 is connected to the output of the second transfer element 3 to receive the output signal of the latter.

When the tracking servo is ON, the target value indicative signal Xreff corresponds to the control magnitude indicative signal Xa of the tracking servo actuator 7 as the operation of the actuator is feedback controlled by the tracking servo loop. This means that the control magnitude Xa of the (mechanical) actuator 7 can be represented by an electric model. Since, as set forth above, the control magnitude of the mechanical actuator 7 corresponds to the target value, the electric model derived from the output of the second transfer element 3 may correspond to the electric model of the mechanical actuator 7. Therefore, the actuator model indicative signal generator circuit 9 in the defective disc detecting circuit 8 arithmetically converts the mechanical control magnitude Xa of the actuator 7 into an electric signal value. Namely, if the transfer characteristics of the actuator can be represented by a secondary transfer function Ga (= 1/(S² + as + b)), an electrical signal having a value corresponding to the control magnitude Xa can be derived by the actuator model indicative signal generating circuit 9.

One example of a practical circuit construction for the actuator model indicative signal generator circuit 9 is shown in Figure 4(a). In the circuit of Figure 4(a), an adder 9A is connected to the coefficient circuit K3 to receive the output of the second transfer element 3 as amplified with the coefficient K3. The adder 9a is connected to an integrator (integrated circuit) 9b which comprises an operation amplifier, a capacitor C and a resistor R. An output of the integrator circuit 9b is connected to another integrator (integrator circuit) 9c which also comprises an operational amplifier, a capacitor C and a resistor R. The output of the integrator 9b is connected to a non-inverting input of the adder 9a via a feedback circuit including a feedback coefficient circuit 9d. An output of the integrator 9c is connected to an inverting input of the adder 9a via a feedback circuit including a feedback coefficient circuit 9e. A Bode diagram of the actuator model to be established by the actuator model indicative signal generator circuit 9 can be a gain curve with ωn =√b as a specific angular frequency, as shown in Figure 4(b). By appropriately selecting the coefficients (amplifier gains) a and b in the coefficient circuits 9d and 9e, a gain curve results that corresponds to the transfer function of a secondary component of the actuator 7. Thus, by adjusting the coefficients in the coefficient circuit 9d and 9e, the electric signal corresponding to the mechanical control magnitude Xa of the actuator 7 can be derived from the output of the second transfer element 3.

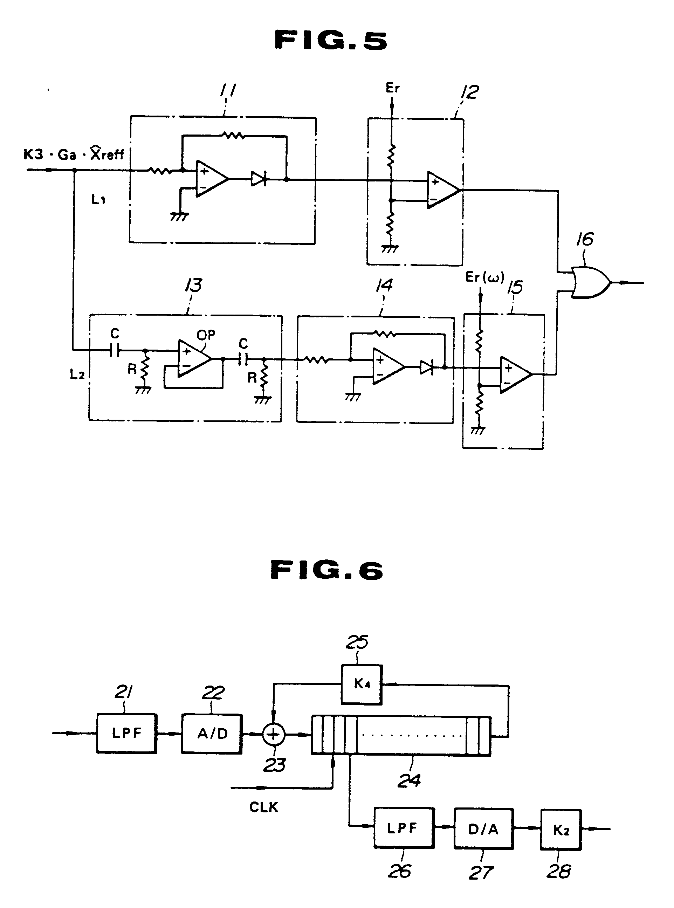

Figure 5 shows an example of the discriminator circuit 10. The discriminator circuit 10 has a signal transfer line L1 including a rectification circuit 11 and a first comparator 12. The rectification circuit 11 is a full-wave rectification circuit 11 for outputting a full-wave rectified signal representative of the absolute value of the input from the modelling circuit 9. A non-inverting input of the first comparator 12 is connected to the rectification circuit 11 and an inverting input of the first comparator 12 has a reference voltage Er applied thereto. Therefore, a HIGH level comparator signal is outputted from the first comparator 12 when the input from the rectification circuit 11 is greater than the reference voltage Er. The comparator signal of the first comparator 12 is fed to an OR-gate 16. An output or gate signal of the OR-gate 16 adopts a HIGH level in response to the HIGH level comparator signal. This HIGH level gate signal serves as a fault indicative signal indicating that the optical disc that is loaded is defective.

The discriminator circuit 10 has another signal transfer line L2 in which are disposed a differentiation circuit 13 which comprises a secondary differential amplifier including resistors R, capacitors C and an operational amplifier OP, a rectification circuit 14 and a second comparator 15. The signal transfer line L₂ is designed for discriminating whether an acceleration component of the actuator model indicative signal produced by the actuator model indicative signal generating circuit 9 is within a standarised axial run out. The limitation for the radial run out relative to the acceleration component is standarised by a slanting line B of -12 dB/OCT in the out of high frequency range: see Figure 7(b). When the rotational speed of the optical disc is high, the frequency of intersection of the slanting line B and a horizontal line which represents absolute value has to be shifted down by shifting the standard run out magnitude, as shown in Figure 7(b). For this purpose, the line B will be shifted towards the left in Figure 7(b).

For this purpose, the actuator model indicative signal input from the actuator model indicative signal generating circuit 9 is differentiated twice, to enhance the high frequency component, by the differentiation circuit 13. An output of the differentiation circuit 13 is fed to a non-inverting input of the second comparator 15 via the rectification circuit 14. An inverting input of the comparator 15 has applied thereto a reference voltage Er(ω) which is variable depending upon the rotational speed of the optical disc. The reference voltage Er(ω), which varies in dependence upon the disc rotational speed, defines the axial run out standard value, i.e. the line B of Figure 7(b). The second comparator 15 compares the input from the differentiation circuit 13 via the rectification circuit 14 with the reference voltage Er(ω) and outputs a HIGH level comparator signal when the former is greater than the latter. The OR-gate 16 is responsive to this HIGH level comparator signal also to output the HIGH level gate signal indicative of a defective disc.

The optical disc recording and reproducing apparatus may be responsive to the defective disc indicative HIGH level gate signal to indicate that "the loaded disc is defective" or to eject the disc so that errors in recording and reproducing information on such defective disc will not occur.

It should be appreciated that the reference voltages Er and Er(ω) to be applied to the first and second comparators 12 and 14 may be set at a value corresponding to the maximum run out magnitude to which the servo system can successfully and satisfactorily respond. Furthermore, the transfer characteristics of the actuator can be illustrated by a secondary delay transfer function. Therefore, when the cut-off characteristics of the actuator match the cut-off characteristics of a high frequency side run out standard, the second signal transfer line L2 can be neglected.

Figure 6 shows another way of implementing the second transfer element 3 in the preferred embodiment of the tracking servo circuit or system. In this case, the second transfer element 3 is constituted by a digital circuit including a low-pass filter 21, an analog-to-digital (A/D) converter 22, an adder 23 and a shaft register 24 which can be driven to shift the data by a clock signal CLK. The last stage of the shift register 24 is connected to the adder 23 via a coefficient circuit 25 of an amplifier having a gain corresponding to a preset coefficient K4. In the illustrated arrangement, the gain of the coefficient K4 set in the coefficient circuit 25 is negative. Therefore, the coefficient circuit 25 serves as an attenuator. Connected to the shift register 24 are a low-pass filter 26, a digital-to-analog (D/A) converter 27 and a coefficient circuit 28 which comprises an amplifier with a gain K2.

The above-described circuit serves as a comb filter. If the clock signal CLK is synchronous with the period of disc rotation and the delay cycle period of the shift register 24 coincides with the disc rotation period, the comb filter may be provided with a peak point at the eccentric component frequency range of the tracking error signal. This provides high response ability to the eccentric component in the tracking error signal. Therefore, the transfer element of Figure 6 achieves substantially the same effect as the circuit of Figure 2 as regards detection of a defective disc.

It should be appreciated that though the above-described embodiment is designed to detect a defective disc from radial run out, the same or a slightly modified process is applicable to a focus servo system for detecting a defective disc from axial run out.

## Claims

1. An optical disc drive system comprising:
an optical head for at least reproducing information on an optical disc, said information including a head position signal (Xa);
a servo system responsive to said head position signal and associated with the optical head for controlling head position with regard to the disc on the basis of the value of a head position error indicative signal (et);
means for indicating disc defects in response to said position error indicative signal; characterised by
extraction means (3) for extracting a run out frequency component in said servo system and for outputting a first signal indicative of said run out frequency component, said run out frequency component being dependent upon disc rotation period;
model means (9) for establishing a model representative of a head actuator (7) coupled to said optical head and for producing a second signal indicative of run out for said optical disc on the basis of the value of said first signal; and
discriminator means (10) for discriminating an excessive run out magnitude of said optical disc on the basis of the value of said second signal.

2. An optical disc drive system according to claim 1, wherein said servo system is a tracking servo system and said head position error indicative signal represents a tracking error, and wherein said extraction means (3) is operative to extract a radial component frequency.

3. An optical disc drive system according to claim 1, wherein said servo system is a focus servo system and said head position error indicative signal represents a focus error, and wherein said extraction means (3) is operative to extract an axial component frequency.

4. An optical disc drive system according to claim 2 or claim 3, wherein said discriminator means (10) is operative to compare an absolute value of said second signal value with a reference signal (Er) which represents a standard run out for detecting a defective disc having a run out magnitude outside of a predetermined standard range represented by said reference value.

5. An optical disc drive system according to claim 2 or claim 3, wherein said discriminator means (10) is operative to differentiate said second signal value to derive a variation magnitude indicative signal and to compare said variation magnitude indicative signal value with a reference value (Er(ω)) which represents a standard run out for detecting a defective disc having a run out magnitude outside of a predetermined standard range represented by said reference value.

6. An optical disc drive system according to claim 2 or claim 3, wherein said discriminator means (10) comprises means (12) for comparing an absolute value of said second signal value with a first reference value (Er) which represents a first standard run out for detecting a defective disc having a run out magnitude outside of a first predetermined standard range represented by said first reference value to produce a first comparator signal when said run out magnitude outside of said first standard range is detected, means (13) for differentiating said second signal value to derive a variation magnitude indicative signal, means (15) for comparing said variation magnitude indicative signal value with a second reference value (Er(ω)) which represents a second standard run out for detecting a defective disc having a run out magnitude outside of a second predetermined standard range represented by said second reference value to produce a second comparator signal when said run out magnitude outside of said second standard range is detected, and means (16) responsive to at least one of said first and second comparator signals to produce a defective disc indicative signal.

7. An optical disc drive system according to any one of claims 1 to 6, wherein said extraction means (3) comprises a filter circuit including a plurality of bandpass filters (3a etc.) having a passband substantially corresponding to a range of said run out frequency.

8. An optical disc drive system according to any one of claims 1 to 6, wherein said extraction means (3) comprises a comb filter circuit (Figure 6) having a peak point set at a frequency range corresponding to said run out frequency.

## Patentansprüche

1. Antriebssystem für eine optische Disk, das umfaßt:
- einen optischer Kopf, der wenigstens für Wiedergabe von Information von einer optischen Disk dient, wobei diese Information ein Signal (Xa) der Position eines Kopfes einschließt;
- ein Servosystem, das auf das Signal der Position des Kopfes anspricht und dem optischen Kopf zugeordnet ist, um die Position des Kopfes in Bezug auf die Disk auf der Basis des Wertes eines Anzeigesignal s eines Positionsfehlers des Kopfes zu überwachen;
- Mittel zur Anzeige von Defekten der Disk, abhängig vom Anzeigesignal des Positionsfehlers;
**gekennzeichnet dadurch,**
daß eine Filtereinrichtung (3) zum Herausfiltern einer Frequenzkomponente der Unrundheit in dem Servosystem und zur Abgabe eines ersten Anzeigesignals dieser Frequenzkomponente der Unrundheit vorgesehen ist, wobei diese Frequenzkomponente der Unrundheit abhängig ist von der Rotationsperiode der Disk;
daß Muster-Mittel (9) vorgesehen sind zur Erzeugung eines Musters, das repräsentativ ist für einen Kopf-Aktuator (7) , der mit dem optischen Kopf gekoppelt ist, und zur Erzeugung eines zweiten Anzeigesignals betreffend die Unrundheit der optischen Disk auf der Basis des Wertes des ersten Signals;
und daß eine Diskriminatoreinrichtung (10) vorgesehen ist zur Entscheidung über übermäßiges Maß der Unrundheit der optischen Disk auf der Basis des Wertes des zweiten Signals.

2. Antriebssystem für eine optische Disk nach Anspruch 1, wobei das Servosystem ein Spur-Servosystem ist und das Anzeigesignal des Positionsfehlers des Kopfes einen Spurfehler angibt und wobei die Filtereinrichtung (3) dahingehend wirksam ist, eine Radial-Frequenzkomponente auszufiltern.

3. Antriebssystem für eine optische Disk nach Anspruch 1, wobei das Servosystem ein Fokus-Servosystem ist und das Anzeigesignal einen Positionsfehler des Kopfes angibt und wobei die Filtereinrichtung (3) dahingehend wirksam ist, eine Axial-Frequenzkomponente herauszufiltern.

4. Antriebssystem für eine optische Disk nach Anspruch 2 oder Anspruch 3,
wobei die Diskriminatoreinrichtung (10) dahingehend wirksam ist, einen absoluten Wert des Wertes des zweiten Signals mit einem Referenzsignal (Er) zu vergleichen, das eine Standard-Unrundheit wiedergibt, um eine defekte Disk mit einer Unrundheit in der Größe zu erkennen, die außerhalb eines vorgegebenen Standardbereiches liegt, der durch den Referenzwert repräsentiert ist.

5. Antriebssystem für eine optische Disk nach Anspruch 2 oder Anspruch 3,
wobei die Diskriminatoreinrichtung (10) dahingehend wirksam ist, den Wert des zweiten Signals zu differenzieren, um ein Anzeigesignal einer Größenänderung abzuleiten und um den Wert des Anzeigesignals dieser Größenveränderung zu vergleichen mit einem Referenzwert (Er(ω )), wobei dieser Wert eine Standard-Unrundheit repräsentiert, um eine defekte Disk mit einer Unrundheit in der Größe zu erkennen, die außerhalb eines vorgegebenen Standardbereiches liegt, der durch den Referenzwert repräsentiert ist.

6. Antriebssystem für eine optische Disk nach Anspruch 2 oder Anspruch 3,
bei dem die Diskriminatoreinrichtung (10) Mittel (12) umfaßt, um einen absoluten Wert des Wertes des zweiten Signals mit einem ersten Referenzwert (Er) zu vergleichen, der eine erste Standard-Unrundheit zum Erkennen einer defekten Disk repräsentiert, die eine Größe der Unrundheit aufweist, die außerhalb eines ersten vorgegebenen Standardbereiches liegt, der durch diesen ersten Referenzwert repräsentiert ist, um ein erstes Komparatorsignal dann zu erzeugen, wenn diese außerhalb des ersten Standardbereiches liegende Größe der Unrundheit festgestellt worden ist,
wobei die Diskriminatoreinrichtung (10) Mittel (13) zum Differenzieren dieses zweiten Signalwertes umfaßt, um ein Anzeigesignal einer Größenänderung abzuleiten,
wobei diese Diskriminatoreinrichtung (10) Mittel (15) umfaßt, um den Wert des Anzeigesignals für die Größenveränderung zu vergleichen mit einem zweiten Referenzwert (Er( ω )), der eine zweite Standard-Unrundheit repräsentiert, um eine defekte Disk zu erkennen, die eine Unrundheit einer solchen Größe hat, die außerhalb eines zweiten vorgegebenen Standardbereiches liegt, der durch den zweiten Referenzwert repräsentiert ist, um ein zweites Komparatorsignal dann zu erzeugen, wenn erkannt ist, daß diese Größe der Unrundheit außerhalb dieses zweiten Standardbereiches liegt, und
daß die Diskriminatoreinrichtung (10) Mittel (16) umfaßt, die auf wenigstens eines der ersten und zweiten Komparatorsignale anspricht, um ein Anzeigesignal für eine defekte Disk zu erzeugen.

7. Antriebssystem für eine optische Disk nach einem der Ansprüche 1 bis 6,
wobei die Filtereinrichtung (3) einen Filterschaltkreis hat, der eine Vielzahl von Bandpaßfiltern (3a etc.) einschließt, die einen Bandpaß haben, der im wesentlichen einem Bereich dieser Frequenz der Unrundheit entspricht.

8. Antriebssystem für eine optische Disk nach einem der Ansprüche 1 bis 6,
wobei die Filtereinrichtung (3) einen Kamm-Filterschaltkreis (Figur 6) mit einem Scheitelpunkt hat, der auf einen Frequenzbereich festgesetzt ist, der der Frequenz für die Unrundheit entspricht.

## Revendications

1. Système de mémoire à disque optique comprenant :
une tête optique pour au moins reproduire de l'information sur un disque optique, ladite information comprenant un signal de position de tête (Xa) ;
un servomécanisme sensible audit signal de position de tête et associé avec la tête optique pour commander la position de tête par rapport au disque sur la base de la valeur d'un signal indicatif d'erreur de position de tête (*et*);
des moyens pour indiquer des défauts de disque en réponse audit signal indicatif d'erreur de position ; caractérisé par :
des moyens d'extraction (3) pour extraire une composante de fréquence d'excursion dans ledit servomécanisme et pour émettre un premier signal indicatif de ladite composante de fréquence d'excursion, ladite composante de fréquence d'excursion étant fonction de la période de rotation du disque ;
des moyens de modélisation (9) pour établir un modèle représentatif de l'actionneur de tête (7) accouplé à ladite tête optique et pour produire un second signal indicatif de l'excursion pour ledit disque optique sur la base de la valeur dudit premier signal ; et,
des moyens discriminateurs (10) pour distinguer une amplitude d'excursion excessive dudit disque optique sur la base de la valeur dudit second signal.

2. Système de mémoire à disque optique selon la revendication 1, dans lequel ledit servomécanisme est un servomécanisme de suivi de piste et ledit signal indicatif d'erreur de position de tête représente une erreur de suivi de piste, et dans lequel lesdits moyens d'extraction (3) servent à extraire une fréquence de composante radiale.

3. Système de mémoire à disque optique selon la revendication 1, dans lequel ledit servomécanisme est un servomécanisme de focalisation et ledit signal indicatif d'erreur de position de tête représente une erreur de focalisation; et dans lequel lesdits moyens d'extraction (3) servent à extraire une fréquence de composante axiale.

4. Système de mémoire à disque optique selon la revendication 2 ou la revendication 3, dans lequel lesdits moyens discriminateurs (10) servent à comparer une valeur absolue de ladite seconde valeur de signal avec un signal de référence (Er) qui représente une excursion standard pour détecter un disque défectueux ayant une amplitude d'excursion à l'extérieur de la plage standard prédéterminée représentée par ladite valeur de référence.

5. Système de mémoire à disque optique selon la revendication 2 ou la revendication 3, dans lequel lesdits moyens discriminateurs (10) servent à différentier ladite seconde valeur de signal pour obtenir un signal indicatif d'amplitude de variation et pour comparer ladite valeur de signal indicatif d'amplitude de variation avec une valeur de référence (Er(ω)) qui représente une excursion standard pour détecter un disque défectueux ayant une amplitude d'excursion à l'extérieur d'une plage standard prédéterminée représentée par ladite valeur de référence.

6. Système de mémoire à disque optique selon la revendication 2 ou la revendication 3, dans lequel lesdits moyens discriminateurs (10) comprennent des moyens (12) pour comparer une valeur absolue de ladite seconde valeur de signal avec une première valeur de référence (Er) qui représente une première excursion standard pour détecter un disque défectueux ayant une amplitude d'excursion à l'extérieur d'une première plage standard prédéterminée représentée par ladite première valeur de référence pour produire un premier signal de comparaison lorsque ladite amplitude d'excursion, à l'extérieur de ladite première plage standard, est détectée, des moyens (13) pour différentier ladite seconde valeur de signal pour obtenir un signal indicatif d'amplitude de variation, des moyens (15) pour comparer ladite valeur de signal indicatif d'amplitude de variation avec une seconde valeur de référence (Er(ω)) qui représente une seconde excursion standard pour détecter un disque défectueux ayant une amplitude d'excursion à l'extérieur d'une seconde plage standard prédéterminée représentée par ladite seconde valeur de référence pour produire un second signal de comparaison lorsque ladite amplitude d'excursion, à l'extérieur de ladite seconde plage standard, est détectée, et des moyens (16), sensibles à au moins l'un desdits premier et second signaux de comparaison, pour produire un signal indicatif de disque défectueux.

7. Système de mémoire à disque optique selon l'une quelconque des revendications 1 à 6, dans lequel lesdits moyens d'extraction (3) comprennent un circuit de filtre incluant une pluralité de filtres passe-bandes (3a etc.) ayant une bande passante correspondant sensiblement à une plage de ladite fréquence d'excursion.

8. Système de mémoire à disque optique selon l'une quelconque des revendications 1 à 6, dans lequel lesdits moyens d'extraction (3) comprennent un circuit de filtre peigne (figure 6) ayant un point de pic fixé au droit d'une plage de fréquence correspondant à ladite fréquence d'excursion.
